# EUROPEAN PATENT APPLICATION

(11) **EP 1 962 038 A1**
(43) Date of publication of application: **27.08.2008**
(21) Application number: 07018736.4
(22) Date of filing: 24.09.2007
(51) Int. Cl.: F27B 9/40, F27B 9/30, F27D 19/00, F27D 21/00, C04B 35/638, C04B 35/64, C04B 38/00

(54) **Heating furnance and method for manufacturing honeycomb structured body**

(30) Priority: 21.02.2007 WO PCT/JP2007/053181
(71) Applicant: IBIDEN CO., LTD., Ogaki-shi Gifu 503-8604 (JP)
(72) Inventor: Saijo, Takamitsu, 2326 Hungary (HU); Higuchi, Koji, Ibi-gun Gifu 501-0695 (JP)
(74) Representative: HOFFMANN EITLE

(57) **Abstract**

An object of the present invention is to provide a heating furnace capable of properly detecting properties of gases in a furnace space in the processes requiring heating such as a degreasing process. The heating furnace according to the present invention is a heating furnace for calcining an object to be heated, including: furnace space for disposing the above-mentioned object to be heated; a heating device for rising in temperature in the above-mentioned furnace space; an oxygen supply channel for introducing gases containing oxygen into the above-mentioned furnace space, formed as an opening in a part of an outer wall surrounding the above-mentioned furnace space; a gas discharge channel connected to the above-mentioned furnace space for discharging gases in the above-mentioned furnace space to an outside of the above-mentioned furnace space; and a measurement device installed in the above-mentioned gas discharge channel for measuring properties of the above-mentioned gases passing through the above-mentioned gas discharge channel.

## Description

### TECHNICAL FIELD

This invention relates to a heating furnace and a method for manufacturing a honeycomb structured body.

### BACKGROUND ART

Recently, particulates that are contained in exhaust gases discharged from internal combustion engines of vehicles, such as buses and trucks, and construction machines and the like, have raised serious problems as those particulates are harmful to the environment and the human body. For this reason, there have been proposed various kinds of particulate filters using honeycomb structured bodies made of porous ceramics for capturing the particulates contained in exhaust gases and purifying the exhaust gases. Further, honeycomb structured bodies that allow contact between supported catalysts and exhaust gases to convert nitrogen oxides and the like in exhaust gases have also been known.

With respect to the honeycomb structured body of this kind, there has been used a honeycomb structured body that is formed by a plurality of rectangular pillar-shaped honeycomb fired bodies manufactured by carrying out treatments such as extrusion molding, degreasing, and firing on ceramics such as silicon carbide and combined with one another by interposing a sealing material layer (adhesive layer) to form the honeycomb structured body.

In processes for manufacturing a honeycomb fired body, a degreasing process is a process for decomposing and removing, under an oxygen atmosphere, an organic matter such as a binder in a honeycomb molded body manufactured by an extrusion molding process, and a degreasing furnace is employed in the degreasing process.

Patent Document 1 discloses a continuous degreasing furnace to be employed in the degreasing process. In a case of employing the continuous degreasing furnace, object to be degreased, which moves in a muffle, can be heated so as to carry out the degreasing process.
Here, in the above-mentioned degreasing process, it is necessary to control properties of gases in the above-mentioned degreasing furnace, that is, a pressure, a temperature, gas concentrations and the like, in proper ranges.
With respect to the gas concentration, when an oxygen concentration is too high, a generation of a large amount of heat, due to short-term decomposition of a large amount of organic matter, causes abrupt rise in temperature of a honeycomb molded body, sometimes resulting in cracks in the honeycomb molded body. On the other hand, when the oxygen concentration is too low, decomposition of the organic matter is not allowed to proceed, sometimes leading to insufficient progress of degreasing. When firing is carried out under the condition of the insufficient progress of the degreasing, a strength of the honeycomb fired body is sometimes decreased.

Patent Document 2 discloses a method for degreasing a silicon carbide molded body by heating under an atmosphere with an oxygen concentration of 1 to 20% in concentrations of gases in a degreasing furnace.
In the invention disclosed in Patent Document 2, although gases with a low oxygen concentration are introduced to adjust an oxygen concentration, in order to control the oxygen concentration in a range from 1 to 20%, it is necessary to properly detect the oxygen concentration in the degreasing furnace.

Patent Document 1: JP-A No. 2002-20174
Patent Document 2: JP-A No. 2002-20173

### DISCLOSURE OF THE INVENTION PROBLEMS TO BE SOLVED BY THE INVENTION

As a method for detecting an oxygen concentration in furnace space, which is space in a degreasing furnace, for disposing a honeycomb molded body therein, there has been employed a method for measuring an oxygen concentration after a certain amount of gases in the furnace space is periodically sampled and then cooled.
However, since gases such as nitrogen, oxygen, and air may be introduced into the furnace space, several kinds of gases sometimes exist to be mixed together in a firing furnace. Further, gases may be generated by combustion of the organic matter and the like in the object to be heated.
A flow of the gases flowing in the furnace space, that is composition of the gases, a direction and a speed of the gas flow and the like, are sometimes significantly fluctuated due to these factors.

Accordingly, under an environment where the flow of the gases flowing in the furnace space in the degreasing furnace are significantly fluctuated, the oxygen concentration in a periphery of a part where the certain amount of the gases are sampled is sometime considerably fluctuated within a short time.
Further, in the case of employing the method for measuring the oxygen concentration in the furnace space by periodically sampling the certain amount of the gases in the furnace space, there is an elapsed time period between the sampling of the gases and the measurement of the concentration.
Therefore, the measured oxygen concentration of the gases does not necessarily properly reflect the oxygen concentration in the furnace space at the time of the measurement, and methods having been employed so far arise a problem that the oxygen concentration in the furnace space cannot be properly detected.

The present invention has been accomplished to solve such problems. An object of the present invention is to provide a heating furnace capable of properly detecting properties of gases in a furnace space in processes requiring heating such as a degreasing process and a method for manufacturing a honeycomb structured body, being capable of manufacturing a honeycomb structured body by removing an organic matter contained in a honeycomb molded body under proper conditions while the properties of the gases in the furnace space are properly detected during the degreasing process.

### MEANS FOR SOLVING THE PROBLEMS

The heating furnace described in claim 1 for accomplishing the above-mentioned object is a heating furnace for calcining an object to be heated and includes: furnace space for disposing the object to be heated; a heating device for rising in temperature in the furnace space; an oxygen supply channel for introducing gases containing oxygen into the furnace space, formed as an opening in a part of an outer wall surrounding said furnace space; a gas discharge channel connected to the furnace space for discharging gases in the furnace space to an outside of the furnace space; and a measurement device installed in the gas discharge channel for measuring properties of the gases passing through the gas discharge channel.

According to the heating furnace of claim 1, the gases containing oxygen is introduced into the furnace space through the oxygen supply channel and the object to be heated is heated by the heating device, so that components contained in the object to be heated can be oxidized and burned.
Further, since the measurement device for measuring the properties of the gases is installed in the gas discharge channel, the properties of the gases passing through the gas discharge channel can be measured.
Herein, no combustion of the organic matter and the like is caused in the gas discharge channel, and the gases flowing in the gas discharge channel flow to the outside of the furnace space from the inside of the furnace space, so that the gases passing through the gas discharge channel flow more stably with less fluctuation in comparison with the gases in the furnace space.
Since the properties of the gases passing through the gas discharge channel reflect average properties of the gases existing in the furnace space, the measurement of the properties of the gases passing through the gas discharge channel allows stable detection of the properties of the gases existing in the furnace space.
Accordingly, the use of the heating furnace of the present invention allows oxidization and combustion of components contained in the object to be heated while the properties of the gases in the furnace space are stably and properly detected by measuring the properties of the gases flowing through the gas discharge channel.
In this specification, "calcination" means removal of volatile components in a substance by strongly heating the substance in air and includes the concept of degreasing.

In the heating furnace described in claim 2, the gases in the furnace space is continuously discharged to the outside of the furnace space.
According to the heating furnace described in claim 2, since the gases passing through the gas discharge channel continuously flow from the furnace space to the outside of the furnace space, the gases to make contact with the measurement device flow in a definite direction to allow more stable detection of the properties of the gases in the furnace space.

In the heating furnace described in claim 3, a flow rate of the gases passing through the gas discharge channel is at least 10 m³/h and at most 100 m³/h (Normal).
When the flow rate of the gases exceeds 100 m³/h (Normal), it becomes difficult to control the temperature of the object to be heated. On the other hand, when the flow rate is lower than 10 m³/h (Normal), the evaporated organic matter is sometimes condensed in the gas discharge channel. However, in the heating furnace of claim 3, since the flow rate of the gases is controlled within the above-mentioned range, the properties of the gases in the furnace space can be more stably detected.

In the heating furnace described in claim 4, the measurement device is a gas concentration sensor, and in the heating furnace described in claim 5, the measurement device is an oxygen concentration sensor.
According to the heating furnace of claim 4, since the gas concentration of the gases passing through the gas discharge channel can be measured, the extent of the chemical reaction progress during heating can be stably detected.
According to the heating furnace of claim 5, since the oxygen concentration can be particularly measured, the extent of the oxidation reaction progress caused by heating the object to be heated can be stably detected.

The heating furnace described in claim 6 includes: a control device having an input unit for inputting a value measured by the measurement device and an output unit for outputting a control signal; and a furnace atmosphere adjustment device operated in accordance with the control signal output by the output unit on the basis of the measured value, and adjusts the properties of the gases in the furnace space by operating the furnace atmosphere adjustment device on the basis of the control signal.
According to the heating furnace described in claim 6, since the measurement device, the control device and the furnace atmosphere adjustment device are installed, the properties of the gases in the furnace space can be adjusted by operating the control device and the furnace atmosphere adjustment device on the basis of the value measured by the measurement device so as to preferably control properties of the object material to be manufactured.

In the heating furnace described in claim 7, the object to be heated is a kneaded material containing inorganic particles and an organic matter kneaded with each other, and in the heating furnace described in claim 8, the organic matter is heated to be removed form the object to be heated.
According to the heating furnace of claims 7 and 8, the organic matter can be removed by heating the object to be heated while the properties of the gases in the furnace space are stably and properly detected.
Further, in the case where the heating furnace of the present invention is provided with the control means and furnace atmosphere adjustment device described in claim 6, the properties of the gases in the furnace space can be controlled in proper ranges, and the object to be heated containing the inorganic particles and the organic matter can be heated, so that the organic matter contained in the object to be heated can be removed at a proper treatment speed without causing cracks in the object to be heated.
Further, the heating furnace described in claim 9 may be used for degreasing the object to be heated.

In the heating furnace described in claim 10, the object to be heated is a pillar-shaped honeycomb molded body obtained by molding a material composition containing a ceramic raw material and an organic matter and having a plurality of cells longitudinally placed in parallel with one another with a cell wall therebetween. According to the heating furnace of claim 10, the honeycomb molded body can be heated while the properties of the gases in the furnace space are stably and properly detected.
Further, in the case where the heating furnace of the present invention is provided with the control device and furnace atmosphere adjustment device described in claim 6, since the properties of the gases in the furnace space can be controlled in proper ranges, the organic matter contained in the honeycomb molded body can be sufficiently decomposed at a proper treatment speed without causing cracks in the honeycomb molded body.

The method described in claim 11 is a method for manufacturing a honeycomb structured body formed by the honeycomb fired body and includes: a honeycomb molded body manufacturing process for molding a material composition containing a ceramic raw material and an organic matter to manufacture a pillar-shaped honeycomb molded body having a plurality of cells longitudinally placed in parallel with one another with a cell wall therebetween; a degreasing process for heating the honeycomb molded body in a heating furnace to remove the organic matter from the honeycomb molded body to manufacture a honeycomb degreased body; and a firing process for firing the honeycomb degreased body to manufacture the honeycomb fired body.
The heating furnace used in the degreasing process includes: furnace space for disposing the honeycomb molded body, a heating device for rising in temperature in the furnace space; an oxygen supply channel for introducing gases containing oxygen into the furnace space, formed as an opening in a part of an outer wall surrounding the furnace space; a gas discharge channel connected to the furnace space for discharging gases in the furnace space to an outside of the furnace space; and a measurement device installed in the gas discharge channel for measuring properties of the gases passing through the gas discharge channel.

According to the method of claim 11, the properties of the gases in the furnace space during the degreasing process can be stably detected by measuring the properties of the gases passing through the gas discharge channel.
Namely, a honeycomb structured body can be manufactured while the properties of the gas in the furnace space are stably and properly detected during the degreasing process.

In the method described in claim 12, in the degreasing process, the gases in the furnace space are continuously discharged to the outside of the furnace space.
According to the method of claim 12, since the gases passing through the gas discharge channel continuously flow toward the outside of the furnace space from the furnace space, the gases to make contact with the measurement device flow in a definite direction, so that the honeycomb structured body can be manufactured while the properties of the gases in the furnace space are more stably detected in the degreasing process.

In the method described in claim 13, in the degreasing process the flow rate of the gases passing through the gas discharge channel is 10 to 100 m³/h (Normal).
When the flow rate of the gases exceeds 100 m³/h (normal), it becomes difficult to control the temperature of the object to be heated. On the other hand, when the flow rate is lower than 10 m³/h (normal), the evaporated organic matter is sometimes condensed in the gas discharge channel. However, since the flow rate of the gases is controlled in the above-mentioned range in the method of the claim 13, the properties of the gases in the furnace space can be more stably detected in the degreasing process.

In the method described in claim 14, the measurement device is a gas concentration sensor and in the method described in claim 15, the measurement device is an oxygen concentration sensor.
According to the method of claim 14, since the gas concentration can be measured among the properties of the gases passing through the gas discharge channel, the honeycomb structured body can be manufactured while the extent of the chemical reaction progress is more stably detected in the degreasing process.
According to the method of claim 15, since the oxygen concentration can be particularly measured, the honeycomb structured body can be manufactured while the extent of the oxidation reaction progress caused by heating the honeycomb molded body is stably detected.

In the method described in claim 16, the heating furnace includes: the control device having an input unit for inputting a value measured by the measurement device and an output unit for outputting a control signal; and the furnace atmosphere adjustment device operated in accordance with the control signal output by the output unit on the basis of the measured value, and the furnace atmosphere adjustment device is operated on the basis of the control signal to adjust the properties of the gases in the furnace space.
According to the method described in claim 16, since the heating furnace to be employed for the degreasing process is provided with the measurement device, the control device and the furnace atmosphere adjustment device, the properties of the gases in the furnace space can be adjusted by operating the control device and the furnace atmosphere adjustment device on the basis of the value measured by the measurement device.
Consequently, it is possible to manufacture the honeycomb structured body by removing the organic matter contained in the honeycomb molded body at a proper treatment speed without causing cracks on the honeycomb molded body in the degreasing process.

### BEST MODE FOR CARRYING OUT THE INVENTION

### (First Embodiment)

Hereinafter, a first embodiment of the present invention will be described with reference to drawings.

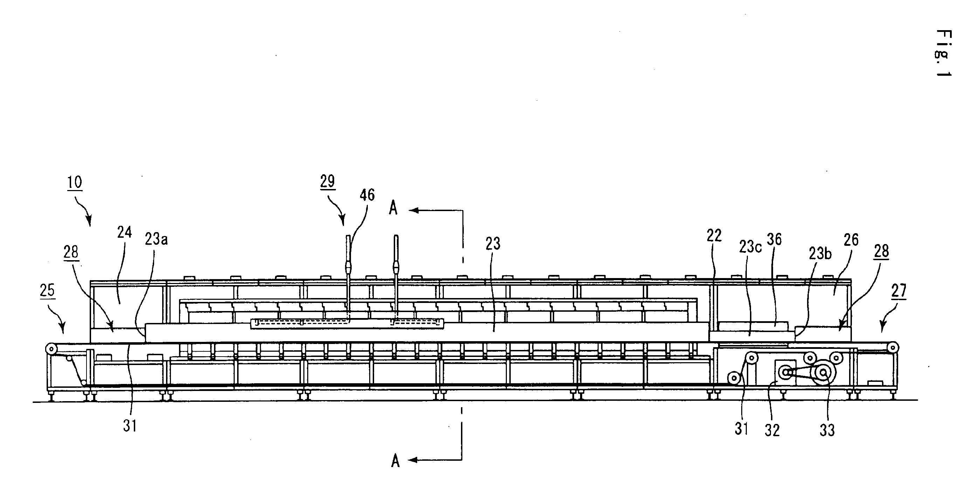

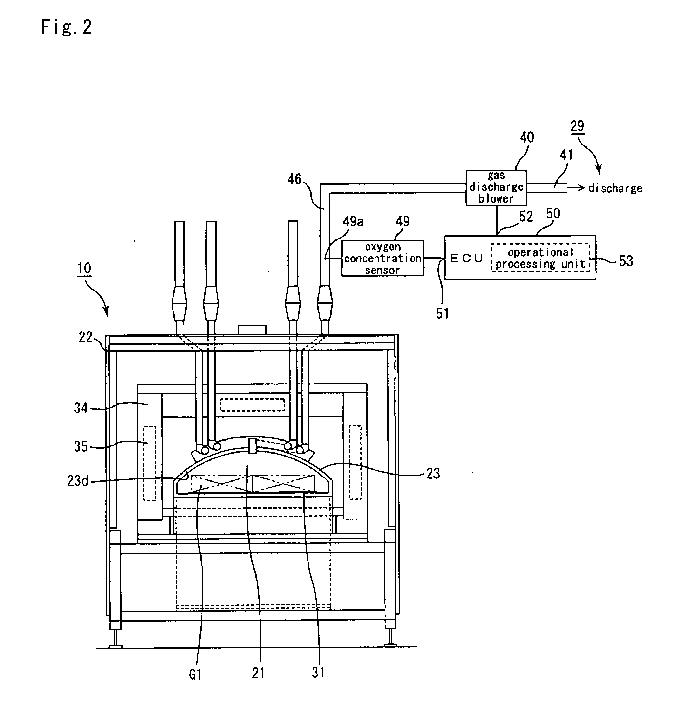

Fig. 1 is a front view showing a heating furnace of the first embodiment of the present invention. Fig. 2 is an A-A line cross-sectional view of the heating furnace shown in Fig. 1.
The heating furnace 10 shown in Figs. 1 and 2 is provided with four gas discharge channels 46. Fig. 2 shows only devices such as a measurement devices and a gas discharge blower 40 installed in right-end gas discharge channel, while these devices are installed in the respective gas discharge channels 46, and a mechanism installed in other gas discharge channels are omitted.

The heating furnace 10 shown in Fig. 1 is a continuous furnace. In a transversely long main body frame 22 forming the heating furnace 10, a tubular muffle 23 made of a refractory material is supported transversely in almost all portions except the carrying-in unit 25 and a carrying-out unit 27, and an inlet purge chamber 24 is provided in the periphery of the inlet unit 23a of the muffle 23.
The carrying-in unit 25 is provided in a step located forward of the inlet purge chamber 24, that is, in the left side in Fig. 1 .
On the other hand, an outlet purge chamber 26 is provided in the periphery of an outlet unit 23b of the muffle 23.
The carrying-out unit 27 is provided in a step located backward of the outlet purge chamber 26, that is, in the right side in Fig. 1.

Furnace space 21 is space surrounded with an outer wall formed by the muffle 23 and allows a degreasing jig G1 on which a honeycomb molded body 100 (an object to be heated) is mounted to be installed in the furnace space 21.
In the inside of the muffle 23, a portion of a conveyer belt 31 is laid along the longitudinal direction of the muffle 23, and a conveyer driving unit including a motor 32 and a plurality of pulleys 33 is installed in the lower back side of the muffle 23. The conveyer belt 31 is rolled around the respective pulleys 33.

Driving the motor 32 makes the conveyer belt 31 movable from the inlet unit 23a to the outlet unit 23b, that is, rightward from the left side in Fig. 1.
When the motor 32 is driven with an object to be heated on the conveyer belt 31 on the front step located forward of the inlet part 23a, the honeycomb molded body 100 (the object to be heated) can be transported from the inlet part 23a to the outlet part 23b.

In the outer wall of the muffle 23 surrounding the furnace space 21, the inlet unit 23a and the outlet unit 23b are open, and the main body frame 22 is open from the carrying-in unit 25 to the carrying-out unit 27. Therefore, air containing oxygen is allowed to flow from the inlet unit 23a and the outlet unit 23b to the carrying-out unit 27. As described above, the heating furnace 10 of the present embodiment is provided with an oxygen supply channel 28, which is an open channel connected to the carrying-out unit 27 from the carrying-in unit 25 via the furnace space 21.

The muffle 23 is surrounded with a heat insulating material 34, and a cooling jacket 36, which is cooling device, is provided in a back end unit 23c of the muffle 23.
Further, a gas discharge channel 46 is connected to a ceiling unit 23d of the muffle 23.

As shown in Fig. 2, the heat insulating material 34 is a square-tubular shaped member and is provided to surround the muffle 23, and a heater 35, which works as a heating device, is provided in the inside of the heat insulating material 34.
The heater 35 is for heating the honeycomb molded body 100 moving in the furnace space 21 to rise in temperature thereof up to a predetermined temperature.
The cooling jacket 36 is for cooling a high-temperature honeycomb degreased body obtained by degreasing the honeycomb molded body 100 to a normal temperature.
By using these devices, the honeycomb molded body 100 can be heated to rise in temperature at which the degreasing can be carried out, and cooled to a normal temperature after the degreasing treatment.

The gas discharge channel 46 is extended from the ceiling unit 23d of the muffle 23 with its one end connected thereto, and the gases in the furnace space 21 are allowed to be discharged to an outside 29 of the furnace space out of the gas discharge channel 46 after passing through a gas discharge unit 41.
Further, a measurement probe 49a of an oxygen concentration sensor 49, which is a measurement device, is provided in the gas discharge channel 46.
A gas discharge blower 40, which is a furnace atmosphere adjustment device, is provided in the middle of the gas discharge channel 46 at a position closer not to the muffle 23 but to the gas discharge unit 41 in relation to a position of the measurement probe 49a.

The oxygen concentration sensor 49 is installed so as to allow the measurement probe 49a and the gases passing through the gas discharge channel 46 to make contact with each other, and electrically connected with an input unit 51 of an electronic control device (hereinafter, referred to as ECU) 50, which is a control device. Therefore, it is possible to measure the oxygen concentration of the gases passing through the gas discharge channel 46 and transmit an obtained measured value to the ECU 50 as an electric signal.
Although not shown in the figure, the oxygen concentration sensor 49 is provided with a display unit for showing the measured oxygen concentration by numeral values.

The ECU 50 is electrically connected to the oxygen concentration sensor 49 at the input unit 51 and the gas discharge blower 40 at the output unit 52. Further, although not in shown the figure, an input mechanism for directly inputting a set value of the oxygen concentration by an operator is also provided. A operational processing unit 53 for calculating the number of revolutions of the gas discharge blower necessary for controlling the oxygen concentration in accordance with the set value of the oxygen concentration and the measured value of the oxygen concentration input in the form of an electric signal is also provided in the inside of the ECU 50.

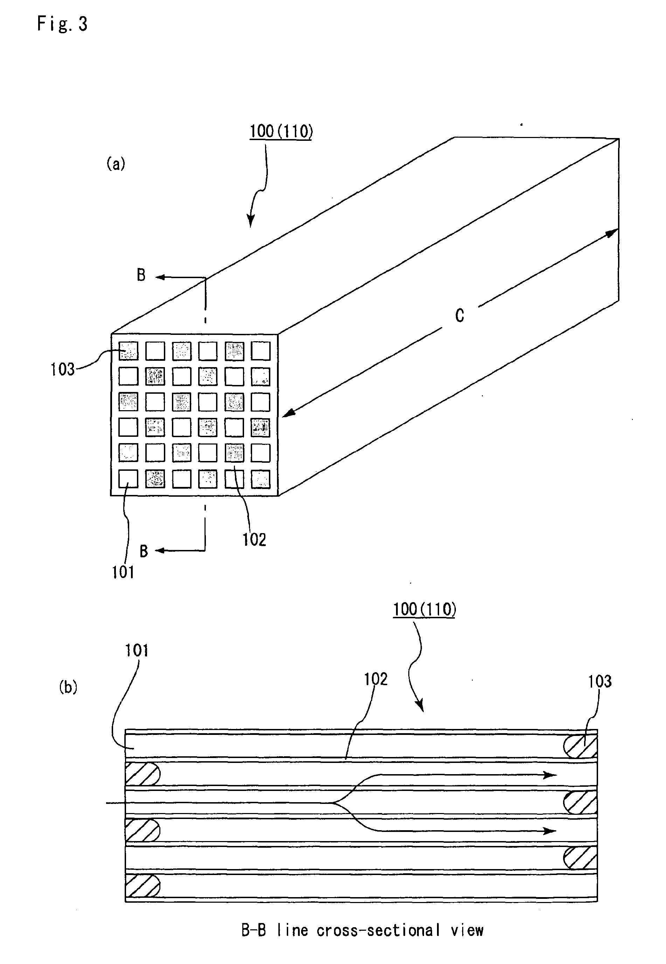

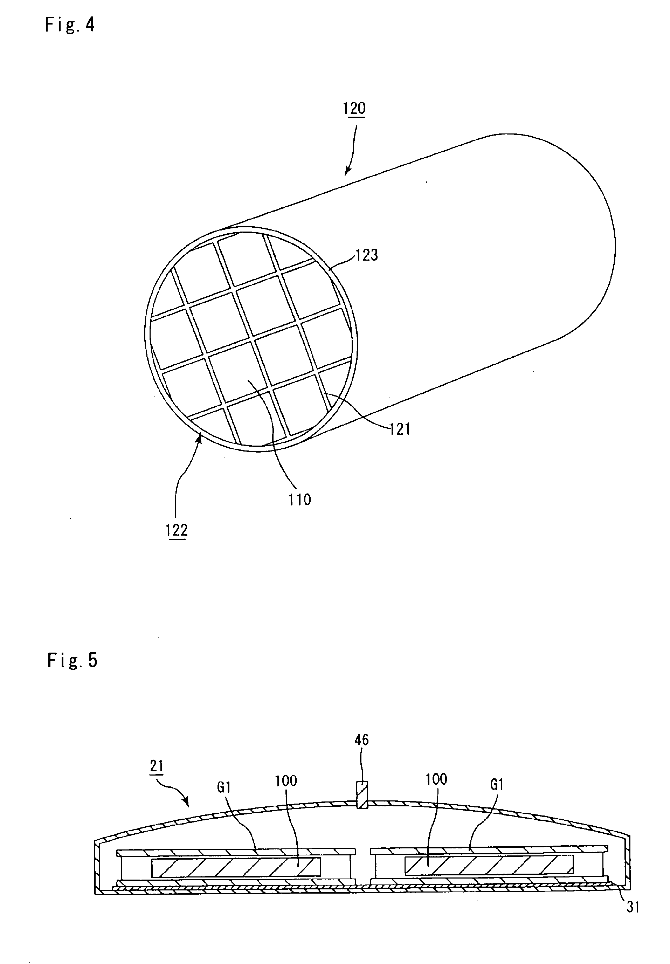

Next, the honeycomb molded body 100, which is an object to be heated, a honeycomb fired body 110 obtained by degreasing and firing the honeycomb molded body, and a honeycomb structured body 120, which is an object to be manufactured by the method for manufacturing the honeycomb structured body of the present embodiment will be described with reference to Figs. 3(a) and 3(b) and 4. Fig. 3(a) is a perspective view schematically showing one example of the honeycomb molded body and Fig. 3 (b) is a B-B line cross-sectional view thereof.
Fig. 4 is a perspective view schematically showing one example of the honeycomb structured body.

As shown in Fig. 3(a), in the honeycomb molded body 100, a large number of cells 101 are longitudinally (direction shown by an arrow C in Fig. 3(a)) placed in parallel with one another and the cells 101 are partitioned by cell walls 102. The cells 101 are sealed by a sealing material 103 at one of the end portions.

The honeycomb fired body 110 is obtained by degreasing and firing the honeycomb molded body 100 of this kind. Since the honeycomb fired body 110 is made of porous ceramics having approximately same shape as that of the honeycomb molded body 100, when exhaust gases flow into one of the cells of the honeycomb fired body 110, the exhaust gases flow out of another cell after certainly passing through the cell wall interposing between the cells. Therefore, when the exhaust gases pass through the cell wall, the particulates in the exhaust gases are captured, resulting in purification of the exhaust gases.
In other words, the cell walls of the honeycomb fired body 110 function as a filter for exhaust gas treatment.

Cutting process is carried out on the periphery of an aggregated body 122, which is formed by a plurality of honeycomb fired bodies 110 combined with one another by interposing a sealing material layer (an adhesive layer) 121, to form a circular cross-section, and a sealing material layer (a coat layer) 123 is formed on the periphery of the aggregated body 122 to manufacture a honeycomb structured body 120.

Hereinafter, the method for manufacturing the honeycomb structured body of the first embodiment will be described in the order of the processes.
Herein, a method for manufacturing a honeycomb structured body in the case of using silicon carbide powders, which is a ceramic raw material, as a main component of constituent materials will be described.

At first, silicon carbide powders having various average particle diameters as a ceramic material and an organic binder are dry blended to prepare a mixed powder, and also a liquid plasticizer, a lubricant and water are mixed to prepare a mixed liquid, and successively the above-mentioned powder mixture and the above-mentioned liquid mixture are wet mixed by using a wet mixing machine to prepare a wet mixture for manufacturing a molded body.

The wet mixture is transported and charged into a molding machine after the preparation.
The wet mixture charged in the extrusion molding machine is formed into a honeycomb molded body having a predetermined shape by extrusion molding. The honeycomb molded body is dried by a microwave drying apparatus, a hot air drying apparatus, a dielectric dryer, a reduced pressure drying apparatus, a vacuum drying apparatus, a freeze drying apparatus and the like to obtain a dried honeycomb molded body.

Next, cutting process to cut the both ends of the manufactured honeycomb molded body by using a cutting machine is carried out to cut the honeycomb molded body into a predetermined length. Subsequently, if necessary, the end portions of the outlet side of the inlet side cell group and the end portions of the inlet side of the outlet side cell group are sealed by filling these parts with a predetermined amount of a sealing material paste to be plugs. Upon sealing the cells, masks for sealing are attached to end faces of the honeycomb molded body (that is, the cut faces after the cutting process) to fill only the cells to be sealed with the plug material paste.
By carrying out such processes, the honeycomb molded body 100, which is an object to be degreased in the degreasing process, is manufactured.

Next, in order to remove the organic matter from the honeycomb molded body in which the plug material paste is filled, the honeycomb molded body is transported to the heating furnace 10 of the present invention, and the degreasing process is carried out to remove the organic matter from the honeycomb molded body 100 to obtain a honeycomb degreased body.
The degreasing process will be described more in detail later.

Next, the manufactured honeycomb degreased body is transported to a firing furnace and the firing process is carried out to manufacture a honeycomb fired body. Processes for applying a sealing material paste to be a sealing material layer (an adhesive layer) to a side face of the obtained honeycomb fired body to form a sealing material paste layer and piling up another honeycomb fired body on the sealing material paste layer are successively and repeatedly carried out to manufacture an aggregated body formed by a predetermined number of honeycomb fired bodies bonded with one another. As the sealing material paste, a material composed of an inorganic binder, an organic binder and inorganic fibers and/or inorganic particles may be used.

Next, the aggregated body of the honeycomb fired bodies is heated to dry and solidify the adhesive paste layers to form sealing material layers (adhesive layers). After that, the aggregated body of the honeycomb fired bodies is cut by a diamond cutter to obtain a ceramic block, a sealing material paste is applied to the periphery face of the ceramic block, and the sealing material paste is dried and solidified to form a sealing material layer (coat layer) to complete a honeycomb structured body.

Next, the operation of the heating furnace in the degreasing process for degreasing the honeycomb molded body 100 will be described.
Upon carrying out the degreasing process, before the honeycomb molded body 100 is put into the degreasing furnace 10, electric power is applied to a heater 35, which works as the heating device, to rise in temperature in the heater 35. The heat from the heater 35 rises in temperature of the muffle 23 to keep the temperature in the furnace space 21 suitable for the degreasing process (200 to 600°C).

Fig. 5 is a magnified figure of the peripheral part of the muffle in Fig. 2.
Upon putting the honeycomb molded body into the degreasing furnace 10, a plurality of honeycomb molded bodies 100 are arranged on the degreasing jig G1 as shown in Fig. 5 to have the longitudinal direction thereof oriented perpendicular to the moving direction of the conveyer belt 31. In the present embodiment, two degreasing jigs G1 are arranged to be in parallel to the width direction of the conveyer belt 31.
Ribs are formed, although not illustrated, on the mounting faces of the degreasing jigs G1 to create a fixed gap between the mounting face of the degreasing jigs G1 and the bottom face of the honeycomb molded bodies 100.

Next, the degreasing jigs G1 on which the honeycomb molded bodies 100 are mounted in such a manner are placed on the conveyer belt 31 in the carrying-in unit 25.
Successively, when the motor 32 is driven, the conveyer belt 31 moves toward the carrying-out unit 27 from the carrying-in unit 25, and therefore the degreasing jigs G1 placed on the conveyer belt 31 are also moved toward the carrying-out part 27.

The degreasing jigs G1 are moved into the furnace space 21 from the inlet unit 23a of the muffle 23 after passing through the inlet purge chamber 24. Along with the movement of the degreasing jigs G1 in the furnace space 21, the temperatures of the degreasing jigs and the honeycomb molded bodies 100 are risen to evaporate the organic matter contained in the honeycomb molded bodies 100, thus the degreasing progresses.

At this time, since the oxygen supply channel 28 is formed in the heating furnace 10 of the present invention, oxygen is continuously supplied to the furnace space 21. Therefore, a part of the evaporated organic matter is reacted with oxygen to be burned. This combustion reaction consumes the organic matter and oxygen and generates reaction gases such as carbon monoxide, carbon dioxide and water vapor.

The evaporated organic matter and the reaction gases are introduced into the gas discharge channel 46 from the ceiling unit 23d of the muffle 23 and discharged out of the discharge outlet 41 through the gas discharge channel 46.
In this case, since the gas discharge blower 40 is installed in the gas discharge channel 46, the gases passing through the gas discharge channel 46 can be controlled to continuously flow in a direction from the furnace space 21 toward the outside of the furnace space by operating the gas discharge blower 40.

The discharged gases pass through the gas discharge channel 46 to make contact with the measurement probe 49a of the oxygen concentration sensor 49 provided in the gas discharge channel 46, so that the oxygen concentration of the gases passing through the gas discharge channel 46 can be measured.
Since the gases passing through the gases discharge channel 46 flow in the definite direction as described above, the gases to make contact with the measurement probe 49a flow in the definite direction, and thus the oxygen concentration can be stably measured.

The oxygen concentration sensor 49 converts the value (electric resistivity etc.) measured by the measurement probe 49a into a proper electric signal and displays the oxygen concentration by numeral values on a display unit. Accordingly, an operator can confirm whether the oxygen concentration is properly controlled in the degreasing process or not.
Further, the oxygen concentration as a measured value is transmitted in the form of an electric signal from the oxygen concentration sensor 49 to the input unit 51 of the ECU 50.

The ECU 50 includes a well known microcomputer formed by CPU, ROM, RAM and the like, which are not illustrated, and a peripheral circuit thereof. The ECU 50 has a computation processing unit 53. The computation processing unit 53 carries out computation processing according to a predetermined program on the basis of the set value of the oxygen concentration and the measured value of the oxygen concentration to compute the necessary number of revolutions of the gas discharge blower 40 for controlling the oxygen concentration in the proper range, and outputs a result obtained by the computation processing as a control signal to the gas discharge blower 40, which is the furnace atmosphere adjustment device, from the output unit 52.

The gas discharge blower 40 changes the number of revolutions on the basis of the control signal output from the output unit 52 of the ECU 50.
This configuration allows controlling of the flow rate of the gases passing through the gas discharge channel 46.
Further, the controlled flow rate of the gases passing through the gas discharge channel 46 allows controlling of the oxygen concentration in the furnace space 21.
Further, since the program for calculating the number of revolutions of the gas discharge blower 40 to adjust the flow rate of the gases in a proper range (10 to 100 m3/h (normal)) is set in the operational processing unit 53, the oxygen concentration in the furnace space 21 can be controlled by controlling the flow rate of the gases passing through the gas discharge channel 46 in the proper range.

Herein, a method for controlling the oxygen concentration in the furnace space 21 will be described more in detail. In the degreasing process, since the organic matter evaporated from the honeycomb molded body 100 is burned, oxygen in the furnace space 21 is consumed, resulting in reduction of the oxygen concentration in the furnace space 21. In a case where the oxygen concentration becomes too low, the gas discharge blower 40 increase the number of revolutions to increase discharge speed. Accordingly, the inner pressure in the furnace space 21 becomes low, and the amount of the air flowing into the furnace space 21 from the oxygen supply channel 28 is increased, resulting in increase of the oxygen concentration in the furnace space 21.
On the other hand, when the amount of the air flowing into the furnace space 21 through the oxygen supply channel 28 is too much, the oxygen concentration in the furnace space 21 becomes high. In a case where the oxygen concentration becomes too high, the number of revolutions of the gas discharge blower 40 is decreased to decrease the discharge speed. Accordingly, the inner pressure of the furnace space 21 is increased, and the amount of the air flowing into the furnace space 21 through the oxygen supply channel 28 is decreased, resulting in reduction of the oxygen concentration in the furnace space 21.

Since the degreasing jig G1 is moved in the furnace space 21 under a condition where the oxygen concentration in the furnace space 21 is controlled within the proper range, the honeycomb molded body 100 is degreased under the condition of the proper oxygen concentration. When the degreasing jig G1 reaches the back end part 23c of the muffle 23, the degreasing jig G1 and the honeycomb molded body 100 are cooled to a room temperature by the cooling jacket 36.

Thereafter, the degreasing jig reaches the outside of the muffle 23 out of the outlet unit 23b of the muffle 23 and is transported to the outside of the heating furnace 10 out of the carrying-out unit 27 after passing through the outlet purge chamber 26 to complete the degreasing process.

Hereinafter, the effects of the heating furnace of the present embodiment and the method for manufacturing the honeycomb structured body by using the heating furnace will be listed up.
(1) Since the measurement probe 49a of the oxygen concentration sensor 49, which is the measurement device, is provided in the gas discharge channel 46, the oxygen concentration of the gases passing through the gas discharge channel 46 can be measured. The oxygen concentration of the gases passing through the gas discharge channel 46 reflects the average oxygen concentration of the gases existing in the furnace space 21 of the heating furnace 10, so that the measurement of the oxygen concentration of the gases passing through the gas discharge channel 46 allows stable and proper detection of the oxygen concentration of the gases existing in the furnace space 21 in the heating furnace 10.
   Accordingly, the organic matter contained in the honeycomb molded body 100 can be oxidized and burned while the oxygen concentration of the gases in the furnace space 21 in the heating furnace 10 is stably and properly detected by measuring the oxygen concentration of the gases passing through the gas discharge channel 46.
(2) Since the gas discharge blower 40 is installed in the gas discharge channel 46, the gases in the furnace space 21 can be continuously discharged to the outside of the furnace space. When the gases passing through the gas discharge channel 46 is allowed to continuously flow toward the outside 29 of the furnace space from the furnace space 21 as described above, the gases to make contact with the measurement probe 49a flow in the definite direction to allow more stable detection of the oxygen concentration in the furnace space 21.
(3) The flow rate of the gases passing through the gas discharge channel 46 can be controlled in the proper range by adjusting the number of revolutions of the gas discharge blower 40. Controlling the flow rate of the gases passing through the gas discharge channel 46 can prevent condensation of the organic matter in the gases in the gas discharge channel 46 and insufficient temperature control of the object to be heated.
(4) Since the measured value of the oxygen concentration is input to the ECU 50 from the oxygen concentration sensor 49 and the number of revolutions of the gas discharge blower 40 is controlled on the basis of the control signal from the ECU 50, the gas discharge speed of the gases to be discharged out of the furnace space 21 can be adjusted on the basis of the measured value of the oxygen concentration measured in the gas discharge channel 46 and the amount of oxygen to be supplied to the furnace space 21 through the oxygen supply channel 28 can be controlled to adjust the oxygen concentration in the furnace space 21.
   Consequently, it is possible to sufficiently decompose the organic matter contained in the honeycomb molded body 100 at a proper treatment speed and also to prevent occurrence of cracks in the honeycomb molded body 100.

### EXAMPLES

Hereinafter, Examples more specifically disclosing the first embodiment of the present invention will be described.

### (Example 1)

A powder mixture was prepared by mixing 250 kg of α-type silicon carbide powder with an average particle diameter of 10 µm, 100 kg of α-type silicon carbide powder with an average particle diameter of 0.5 µm, and 20 kg of an organic binder (methyl cellulose).
Next, separately, a liquid mixture was prepared by mixing 12 kg of a lubricant (UNILUB, manufactured by NOF CORPORATION), 5 kg of a plasticizer (glycerin), and 65 kg of water, and the liquid mixture and the powder mixture were mixed by a wet mixing machine to prepare a wet mixture.
The water content of the prepared wet mixture was 14% by weight.

Next, the wet mixture was transported to an extrusion molding apparatus by using a transportation device and put into the raw material inlet of the extrusion molding device.
The water content of the prepared wet mixture was 13.5% by weight immediately before the putting into the extrusion molding machine.
Thereafter, a raw molded body with an approximately same shape as that of the honeycomb molded body 100 shown in Fig. 3(a) was manufactured by extrusion molding.

Next, after the raw molded body was dried by a microwave drying apparatus, the plug material paste with the same composition as that of the above-mentioned wet mixture was injected into predetermined cells, and the resulting molded body was further dried by the drying apparatus to manufacture a honeycomb molded body 100, which is formed by silicon carbide molded body, having the number of cells (cell density) of 46.5 cells/cm², a size of 34.3 mm×34.3 mm×250 mm and a thickness of the cell wall of 0.30 mm.

Next, the honeycomb molded body 100 was degreased at a temperature of 400°C by using a heating furnace 10 described in the first embodiment. The specific design of the heating furnace 10 is as follows.
The heating furnace 10 was a continuous furnace, including the muffle 23 with a length of 2.4 m, a width of 0.85 m and a maximum height of 0. 15 m, and the furnace space 21 with a total capacity of 2.7 m³.
Four gas discharge channels 46 stood uprightly from the muffle 23 and were circular tubes with a diameter of 0.1 m. A measurement probe 49a of an oxygen concentration sensor 49 was provided at a position of 1 m distant from the ceiling unit 23d of the muffle 23 toward the gas discharge unit side in each gas discharge channel 46.

The degreasing process was carried out according to the following procedure by using the heating furnace 10.
At first, electric power was applied to the heater 35, and the temperature of the heater 35 is risen to adjust the temperature in the furnace space 21 to be 400°C. Further, the motor 32 was driven to move the conveyer belt 31 in a direction from the carrying-in unit 25 to the carrying-out unit 27.
At that time, the moving speed of the conveyer belt 31 was 140 mm/min.
A large number of degreasing jigs G1 each housing ten honeycomb molded bodies 100 were prepared.
In the carrying-in unit 25 of the heating furnace 10, the degreasing jigs G1 arranged along the proceeding direction of the conveyer belt 31 were placed on the conveyer belt 31, and the degreasing jigs G1 were successively introduced into the furnace space 21 of the muffle 23 to continuously carry out the degreasing treatment for the honeycomb molded bodies 100.

While the set value of the oxygen concentration to be input to the ECU 50 was determined to be 10% by volume, the oxygen concentrations in the gas discharge channels 46 were measured by the oxygen concentration sensors 49, and on the basis of the measured oxygen concentration, the number of revolutions of the gas discharge blower 40 was controlled to adjust the oxygen concentration in the furnace space 21.
Further, the flow rate of the gases passing through the gas discharge channels 46 was continuously operated according to a program set in the operational processing unit 53 to adjust the flow rate in a range from 10 to 100 m³/h (Normal), and the gases were continuously discharged to the outside 29 of the furnace space 21.
The degreasing jigs G1 housing the honeycomb degreased bodies were taken out to the outside out of the carrying-out unit 27 to complete the degreasing process.

Subsequently, the honeycomb degreased bodies were fired at a temperature of 2200°C for 3 hours in an argon atmosphere at a normal pressure to complete the manufacture of honeycomb fired bodies formed by silicon carbide sintered bodies.

### (Reference Example 1)

The degreasing process was carried out in the same manner as Example 1 to manufacture honeycomb fired bodies, except that the program set in the computation processing unit 53 was changed to adjust the flow rate of the gases passing through the gas discharge channels 46 in a range of 5 to 100 m³/h (Normal), and the gas discharge blower 40 was continuously operated according to this program.

### (Reference Example 2)

The degreasing process was carried out in the same manner as Example 1 to manufacture honeycomb fired bodies, except that the program set in the operational processing unit 53 was changed to adjust the flow rate of the gases passing through the gas discharge channels 46 in a range of 10 to 120 m³/h (normal), and the gas discharge blower 40 was continuously operated according to this program.

### (Reference Example 3)

The degreasing process was carried out in the same manner as Example 1 to manufacture honeycomb fired bodies, except that the program set in the operational processing unit 53 was changed to control the ON-OFF of revolutions of the gas discharge blower 40 instead of controlling the number of revolutions of the gas discharge blower upon controlling the oxygen concentration, and the gas discharge blower 40 was not continuously operated according to of this program.

### (Comparative Example 1)

A probe of an oxygen concentration sensor was additionally provided in the furnace space 21 of the heating furnace 10 used in Example 1 to manufacture a heating furnace.
The position of the measurement probe of the additionally installed oxygen concentration sensor was a position extruded by 1 cm inward in the furnace space 21 from the ceiling unit 23d of the muffle 23 and shifted by 0.2 m in the direction (the right side in Fig. 2) of the side face of the muffle 23 from the highest point of the ceiling unit 23d of the muffle 23.
Since the additionally installed oxygen concentration sensor was not connected to the ECU 55, the additionally installed oxygen concentration sensor had only a function of exclusively measuring the oxygen concentration in the furnace space 21.
Namely, the heating furnace was allowed to measure the oxygen concentrations simultaneously in the gas discharge channels 46 and also in the furnace space 21 to control the oxygen concentration on the basis of the results of the measured oxygen concentration of the gases flowing through the gas discharge channels 46.
The degreasing process was carried out in the same manner as Example 1 by using this heating furnace to manufacture honeycomb fired bodies.

### (Evaluation of recorded results of oxygen concentration in the degreasing process)

In the degreasing processes of Example 1, Reference Examples 1 to 3 and Comparative Example 1, the oxygen concentrations were measured by the oxygen concentration sensors installed in respective heating furnaces and recorded to evaluate the spread of the measured values of the oxygen concentrations.
Specifically, the degreasing jigs G1 housing the honeycomb molded bodies 100 were successively introduced into the heating furnace, the heating furnace was continuously operated, and after 60 minutes from the operation, the oxygen concentrations were recorded at every 1 minute for 150 minutes.

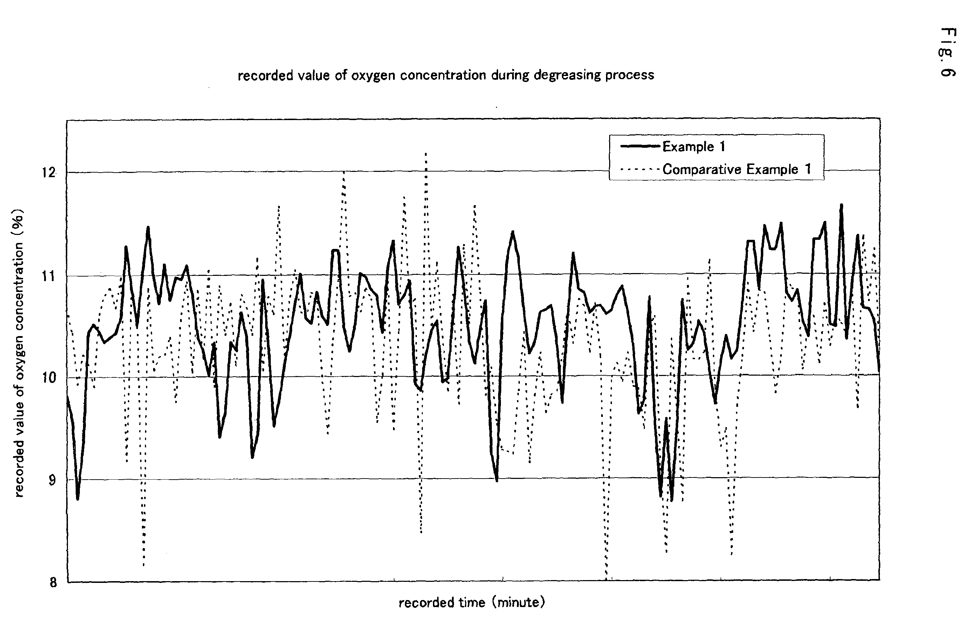

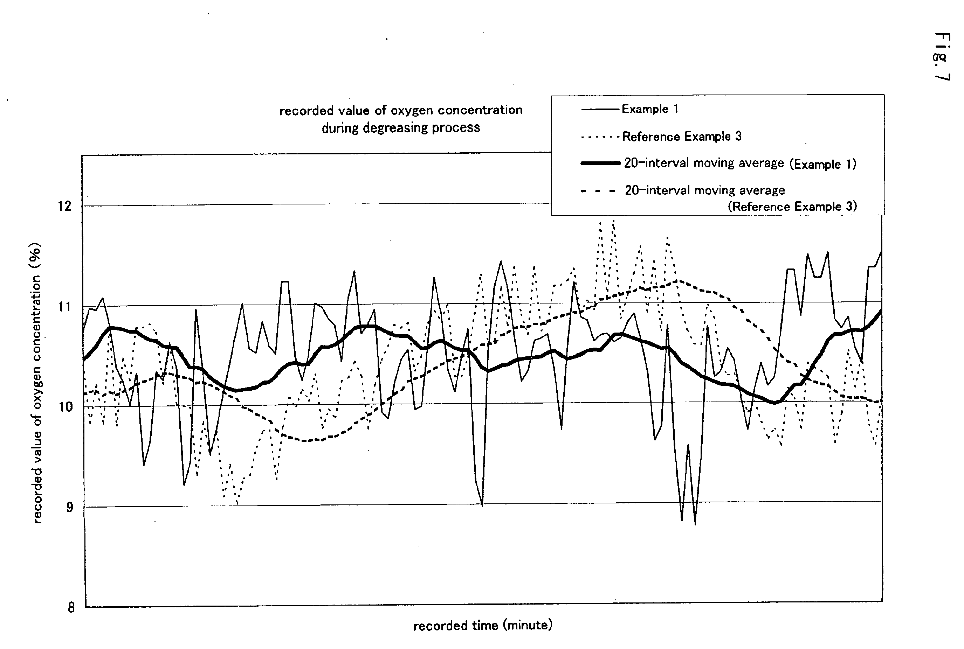

The conditions for recording the oxygen concentrations and the average values and variation of the results recorded in all of Example, Reference Examples, and Comparative Example are shown in Table 1.
Further, the relationships of the time (minute) from start of the recording with the oxygen concentrations (% by volume) recorded in Example 1 and Comparative Example 1 are shown in Fig. 6.
Further, the relationships of the time (minute) from start of the recording with the oxygen concentrations (% by volume) recorded in Example 1 and Reference Example 3 are shown in Fig. 7. Fig. 7 also shows interval moving average curves for every 20 minutes of the oxygen concentrations.

Although, in Comparative Example 1, the oxygen concentrations were measured simultaneously by the oxygen concentration sensor with the measurement probes thereof provided in both of the furnace space 21 and the gas discharge channels 46, Table 1 and Fig. 6 show the recorded results of oxygen concentration measured in the furnace space 21.

Although the measurement and recording of the oxygen concentrations were carried out in all the four gas discharge channels 46, Table 1, Fig. 6, and Fig. 7 show the measured values by the sensor installed in the right side gas discharge channel 46 (the gas discharge channel where the temperature became highest) in Fig. 1.

**[Table 1]**

| | installation position of the oxygen concentration sensor | oxygen concentration measurement position for recording | flow rate [m³/h (Normal)] | continuous discharge | oxygen concentration recorded value | | notes |
|---|---|---|---|---|---|---|---|
| | | | | | (vol%) | max-min | |
| Example 1 | gas discharge channel | gas discharge channel | 10-100 | YES | 8.8 to 11.6 | 2.8 | - |
| Reference Example 1 | as discharge channel | gas discharge channel | 5-100 | YES | 8.6 to 11.4 | 2.8 | organic matter condensed in gas discharge channel |
| Reference Example 2 | gas discharge channel | gas discharge channel | 10-120 | YES | 9.2 to 12.0 | 2.8 | Insufficient temperature control in molded body |
| Reference Example 3 | as discharge channel | gas discharge channel | 0-100 | NO | 9.1 to 11.8 | 2.7 | organic matter condensed in gas discharge channel |
| Comparative Example 1 | furnace space/gas discharge channel | furnace space | 10-100 | YES | 8.0 to 12.2 | 4.2 | same state in furnace space as that of Example 1 |

As clearly shown in Table 1 and Fig. 6, since the oxygen concentrations were measured in gas discharge channels in Example 1 and Reference Examples 1 to 3, the spreads of the recorded values of the oxygen concentrations were small (the effect (1)). On the other hand, in Comparative Example 1, since the oxygen concentration was measured in the furnace space, the spread of the recorded values of the oxygen concentrations was large.
In particular, in comparison of Example 1 with Comparative Example 1, although practical conditions in the furnace space were supposed to be same, the spreads of the recorded values considerably differed from each other. Accordingly, it became clear that stable measured values can be obtained by measuring the oxygen concentration in the gas discharge channels, leading to proper detection of oxygen concentrations (effect (1)).

Further, as clearly shown in Fig. 7, since the gases in the furnace space were continuously discharged to the outside of the furnace space in Example 1, it is understood that the interval moving average curve could be less undulating as compared with that of Reference Example 3 in which the gases in the furnace space were not continuously discharged to the outside of the furnace space. Accordingly, it became clear that the oxygen concentration in the furnace space 21 can be more stably detected (effect (2)).

Further, in Example 1, since the flow rate of the gases passing through the gas discharge channels was controlled in the proper range, the organic matter was not condensed in the gas discharge channels, and the degreasing of the honeycomb molded bodies was sufficiently progressed (effect (3)).
On the other hand, in Reference Examples 1 and 3, the flow rates of the gases passing through the gas discharge channels were sometimes less than 10 m³/h (Normal), and it was observed that a part of the organic matter was condensed in the gas discharge channels.
Further, in Reference Example 2, the flow rate of the gases passing through the gas discharge channels sometimes exceeded 100 m³/h (Normal), and the temperature of the honeycomb molded bodies, which is the objects to be heated, was not sufficiently controlled, so that the degreasing of the honeycomb molded bodies was sometimes insufficiently carried out.

### (The second embodiment)

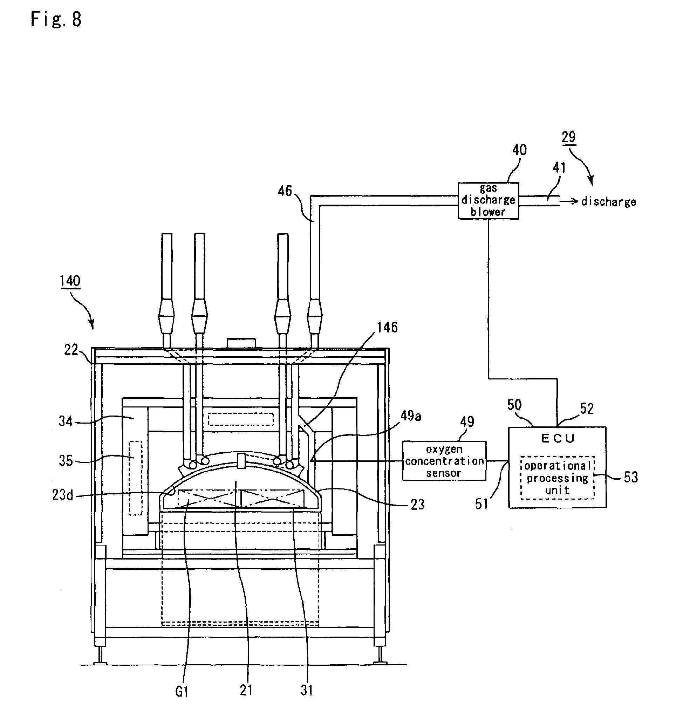

Fig. 8 is a schematic cross-sectional view showing a part of a heating furnace of another embodiment of the present invention.
In a heating furnace 140 of the present embodiment, a gas discharge channel 146 for measurement is separately provided from the gas discharge channels 46. One end of the gas discharge channel 146 for measurement is connected to the ceiling unit 23d of the muffle 23 and the other end is connected to a gas discharge channel 46. An oxygen sensor 49a is installed in the gas discharge channel 146 for measurement.

In the heating furnace 140 of the present embodiment, the oxygen concentration of the gases passing through the gas discharge channel 146 for measurement can be measured. The gases passing through the gas discharge channel 146 for measurement flow more stably, compared with the gases in the furnace space 21, so that the oxygen concentration can be stably measured.
Further, since the oxygen concentration can be controlled on the basis of the measured oxygen concentration, the oxygen concentration can be adjusted in the proper range.
Accordingly, also in the heating furnace having such a configuration, the measurement and control of the oxygen concentration can be carried out similarly to the case of the heating furnace of the first embodiment and the effects (1) to (4) can be produced also in the present embodiment.

### (Third Embodiment)

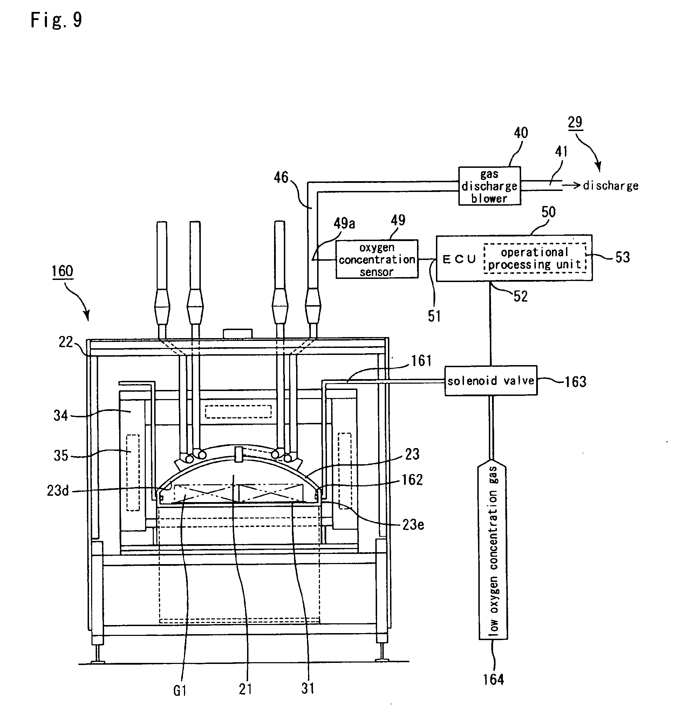

Fig. 9 is a schematic cross-sectional view showing a part of the heating furnace of another embodiment of the present invention.
In a heating furnace 160 of the present embodiment, in place of a gas discharge blower 40 used as the furnace atmosphere adjustment device, gas introduction device for adjusting the oxygen concentration by introducing gases with a low oxygen concentration into the muffle is used. The gas introduction device includes a pipe 161, a nozzle 162, a solenoid valve 163, and a gas supply source 164.
In the heating furnace 160, unlike the heating furnace 10 shown in the first embodiment, the output unit 52 of the ECU 50 is connected to the solenoid valve 163 but not connected electrically to the gas discharge blower 40.

In the gas introduction device, the pipe 161 is provided with the nozzle 162 on one end of the pipe 161 and the nozzle 162 is connected to a sidewall unit 23e of the muffle 23. The other end of the pipe 161 is connected to the gas supply source 164 through the solenoid valve 163.
The gas supply source 164 stores low oxygen concentration gases, which is a gas mixture containing nitrogen and oxygen, is introduced into the muffle 23, that is, the furnace space 21, from the nozzle 162 after passing through the pipe 161.

The solenoid valve 163 is electrically connected to the output unit 52 of the ECU 50 and the aperture can be adjusted on the basis of the control signal output from the ECU 50.
The flow rate of the low oxygen concentration gas to be introduced into the furnace space 21 from the gas supply source 164 after passing through the solenoid valve 163, the pipe 161 and the nozzle 62, can be adjusted by adjusting the aperture of the solenoid valve 163. As described above, the oxygen concentration in the furnace space 21 can be adjusted by operating the solenoid valve 163.
Specifically, in a case where the oxygen concentration in the furnace space 21 is high, the aperture of the solenoid valve 163 is increased to introduce the low oxygen concentration gases into the furnace space 21 from the gas supply source 164 to lower the oxygen concentration in the furnace space 21.
On the contrary, in a case where the oxygen concentration in the furnace space 21 is low, the aperture of the solenoid valve 163 is decreased to introduce a less amount of the low oxygen concentration gases into the furnace space 21 from the gas supply source 164 to increase the oxygen concentration in the furnace space 21.
Accordingly, the effects (1) to (3) can be produced also in the present embodiment. Further, it is also possible to adjust the oxygen concentration in the furnace space 21 by adjusting an amount of the low oxygen concentration gases to be supplied to the furnace space 21 from the gas supply source 164 on the basis of the measured value of the oxygen concentration measured in the gas discharge channels 46.
Consequently, it is possible to sufficiently decompose the organic matter contained in the honeycomb molded bodies 100 at a proper treatment speed in the degreasing process and prevent occurrence of cracks on the honeycomb molded bodies 100.

### (Fourth Embodiment)

Although not particularly illustrated, the heating furnace of the present embodiment employs both of the gas discharge blower 40 described in the first embodiment and gas introduction device described in the third embodiment. In the heating furnace of the present embodiment, both of the gas discharge blower 40 and a solenoid valve 163 are connected to an output unit 52 of an ECU 52, and both of the gas discharge blower 40 and the solenoid valve 163 are operated by the control signal output from the output unit 52 of the ECU 50 to adjust the oxygen concentration in the furnace space 21.
Accordingly, it is possible to produce the effects (1) to (4) also in the present embodiment, and sufficiently decompose the organic matter contained in the honeycomb molded bodies 100 at a proper treatment speed in the degreasing process, and prevent occurrence of cracks on the honeycomb molded bodies 100.

### (Another Embodiment)

The heating furnace in the first embodiment and the method for manufacturing a honeycomb structured body may be as follows.
The heating furnace may be a batch type heating furnace other than the continuous furnace as shown in Fig. 1.
Even in a case of employing the batch type heating furnace, a muffle, gas discharge channel, measurement device, control device, and furnace atmosphere adjustment device similar to those in the heating furnace 10 of the first embodiment can be installed. The heating furnace and respective units thereof desirably have shapes and sizes enabling an operator to put into or taken out the degreasing jigs G1 by manual.
In a case of carrying out the degreasing process using the batch type heating furnace, instead of the continuous putting-into and taken-out of the degreasing jigs G1 using the conveyer belt, a predetermined number of the degreasing jigs G1 may be put into the furnace space and taken out upon completion of the degreasing process by manual, and other degreasing jigs G1 are put into the furnace space again, thus the degreasing process can be carried out by repeating these steps.
Even in the case of such a batch type heating furnace, the properties of the gases in the heating furnace can be detected properly by installing the measurement device in the gas discharge channels.

Further, the properties of the gases measured in the gas discharge channels are not limited to the oxygen concentration, but may be the concentration of another gas, for example, a concentration of alcohol, which is an organic matter evaporated from the honeycomb molded body, or the concentrations of carbon monoxide, carbon dioxide and steam generated by combustion of the organic matter, the temperature of the gases or the like.
A plurality of properties may be simultaneously measured by installing a plurality of measurement devices.

The heating furnace 10 shown in Figs. 1 and 2 includes four gas discharge channels 46, and measurement probes 49a are installed in the respective gas discharge channels 46, however the measurement probes 49a may be installed in only some of the gas discharge channels 46.
Even in such a case, the properties of the gases passing through the gas discharge channels 46 can be measured and the properties of the gases existing in the furnace space 21 can be stably detected.
Further, the device for discharging the gases to the outside of the furnace space is not necessarily limited to the gas discharge blower, and a device such as a gas discharge fan and a vacuum pump may be employed.

The honeycomb structured body to be manufactured in the embodiment is not limited to a honeycomb structured body with sealed cells. The honeycomb structured body with sealed cells can be preferably used as a honeycomb filter, and the honeycomb structured body with unsealed cells can be preferably used as a catalyst supporting carrier.
Accordingly, in the method for manufacturing a honeycomb structured body of the present embodiments, filling of a plug material paste is not necessarily carried out, and if necessary, the filling may be carried out.

The main component of the constituting materials of the honeycomb structured body is not limited to silicon carbide, and examples of other ceramic raw materials include inorganic powders: a nitride ceramics such as aluminum nitride, silicon nitride, boron nitride, and titanium nitride; a carbide ceramics such as zirconium carbide, titanium carbide, tantalum carbide, and tungsten carbide; and an oxide ceramics such as alumina, zirconia, cordierite, mullite, and aluminum titanate, and the like.
Among these, a non-oxide ceramics is preferably used and silicon carbide is more preferably used. This is because these ceramics are superior in the heat resistance, mechanical strength, thermal conductivity and the like. Moreover, silicon-containing ceramics such as metallic silicon blended with the above-mentioned ceramics and ceramics bound by silicon or silicate compounds can also be used as the constituting material of the honeycomb structured body. Among these, a ceramics (silicon-containing silicon carbide) in which metallic silicon is blended with silicon carbide is preferably used.

Although the particle diameter of the silicon carbide powder used for manufacturing the honeycomb structured body is not particularly limited, the silicon carbide powder that tends not to cause the case where the size of the honeycomb fired body manufactured by the following firing treatment becomes smaller than that of the honeycomb degreased body is desirable, and for example, mixed powder, prepared by combining 100 parts by weight of ceramic particles having an average particle diameter from 0.3 to 50 µm with 5 to 65 parts by weight of ceramic particles having an average particle diameter from 0.1 to 1.0 µm, is preferably used.
In order to adjust the particle diameter and the like of the honeycomb structured body, it is necessary to control the firing temperature. However, the particle diameter can be adjusted by adjusting the particle diameter of the inorganic powders.

The organic binder for the wet mixture is not particularly limited, and examples thereof include methyl cellulose, carboxymethyl cellulose, hydroxyethyl cellulose, polyethylene glycol and the like. Among these, methyl cellulose is preferably used. Ordinarily, an amount of the organic binder to be mixed is preferably 1 with respect to 10 parts by weight to 100 parts by weight of the inorganic powders.
The plasticizer for the wet mixture is not particularly limited, and examples thereof include glycerin and the like. In addition, the lubricant is not particularly limited, and examples thereof include polyoxyalkylene compounds such as polyoxyethylene alkyl ether and polyoxypropylene alkyl ether, and the like.
Specific examples of the lubricant include polyoxyethylene monobutyl ether, polyoxypropylene monobutyl ether and the like.
The plasticizer and the lubricant may not be added to the mixed raw material powders in some cases.

In the case of preparing the wet mixture, a dispersant solution may be used, and examples of the dispersant solution include water, organic solvent such as benzene, alcohol such as methanol, and the like.
The wet mixture may contain a molding assistant.
As the molding assistant, although not particularly limited, examples thereof include ethylene glycol, dextrin, fatty acid, fatty acid soap, polyalcohol and the like.

A pore-forming agent, such as balloons that are fine hollow spheres composed of oxide-based ceramics or spherical acrylic particles, graphite and the like, may be added to the wet mixture, if necessary.
As the balloons, although not particularly limited, examples thereof include alumina balloons, glass micro-balloons, shirasu balloons, fly ash balloons (FA balloons), mullite balloons and the like. Among these, alumina balloons are preferably used.

The wet mixture prepared by containing the silicon carbide powder is preferable at a temperature of 28°C or less. It is because the organic binder may sometimes become gel, when the temperature is too high.
The percentage of the organic matter contained in the wet mixture is preferably 10% by weight or less, and the content of water is preferably 8.0 to 20.0% by weight.

Although the plug material paste for sealing the cells is not particularly limited, a plug material paste on which post-process are carried out to form a plug having a porosity of 30 to 75% is preferably used, and, for example, those same as the wet mixture may be used.

Upon manufacturing an aggregated body of honeycomb fired bodies, the honeycomb fired bodies may be previously built up by interposing a spacer therebetween, and thereafter, a sealing material paste is injected into a gap between neighboring honeycomb fired bodies to manufacture the aggregated body of honeycomb fired bodies.

As the inorganic binder in the sealing material paste, examples thereof include silica sol, alumina sol and the like. Each of these may be used alone, or two or more kinds of these may be used in combination. Among these inorganic binders, silica sol is preferably used.

As the organic binder in the sealing material paste, examples thereof include polyvinyl alcohol, methyl cellulose, ethyl cellulose, carboxymethyl cellulose and the like. Each of these may be used alone, or two or more kinds of these may be used in combination. Among these, organic binders, carboxymethyl cellulose is preferably used.

As the inorganic fibers in the sealing material paste, examples thereof include ceramic fibers such as silica-alumina, mullite, alumina and silica, and the like. Each of these may be used alone, or two or more kinds of these may be used in combination. Among these inorganic fibers, almina fiber is preferably used.

As the inorganic particles in the sealing material paste, examples thereof include carbides, nitrides and the like. Specific examples thereof include inorganic powders made from silicon carbide, silicon nitride, and boron nitride, and the like. Each of these may be used alone, or two or more kinds of these may be used in combination. Among inorganic particulates, silicon carbide superior in thermal conductivity is preferably used.

Furthermore, a pore-forming agent, such as balloons that are fine hollow spheres composed of oxide-based ceramics or spherical acrylic particles, graphite and the like, may be added to the sealing material paste, if necessary. As the balloons, although not particularly limited, examples thereof include alumina balloons, glass micro-balloons, shirasu balloons, fly ash balloons (FA balloons), mullite balloons and the like. Among these, alumina balloons are preferably used.

### BRIEF DESCRIPTION OF THE DRAWINGS

Fig. 1 is a front view showing a heating furnace of the first embodiment.
Fig. 2 is an A-A line cross-sectional view of the heating furnace shown in Fig. 1.
Fig. 3 (a) is a perspective view schematically showing one example of the honeycomb molded body, and Fig. 3(b) is a B-B line cross-sectional view.
Fig. 4 is a perspective view schematically showing one example of the honeycomb structured body.
Fig. 5 is a magnified figure of the peripheral part of the muffle shown in Fig. 2.
Fig. 6 is a graph showing relationships of the time (minute) from start of recording with recorded oxygen concentrations (% by volume) in Example 1 and Comparative Example 1.
Fig. 7 is a graph showing relationships of the time (minute) from start of recording with recorded oxygen concentrations (% by volume) in Example 1 and Reference Example 3.
Fig. 8 is a cross-sectional view showing a heating furnace of the second embodiment of the present invention.
Fig. 9 is a cross-sectional view showing a heating furnace of the third embodiment of the present invention.

### EXPLANATION OF SYMBOLS

- 10: heating furnace (first embodiment)
- 21: furnace space
- 23: muffle (outside wall)
- 28: oxygen supply channel
- 29: outside of the furnace space
- 35: heater (heating device)
- 40: gas discharge blower (furnace atmosphere adjustment device)
- 46: gas discharge channel
- 49: oxygen concentration sensor (measurement device)
- 49a: measurement probe
- 50: ECU (control device)
- 51: input unit
- 52: output unit
- 100: honeycomb molded body
- 101: cell
- 102: cell wall
- 110: honeycomb fired body
- 120: honeycomb structured body
- 140: heating furnace (second embodiment)
- 146: gas discharge channel for measurement (gas discharge channel)
- 160: heating furnace (third embodiment)
- G1: degreasing jig

## Claims

1. A heating furnace for calcining an object to be heated, comprising:
furnace space for disposing said object to be heated;
a heating device for rising in temperature in said furnace space;
an oxygen supply channel for introducing gases containing oxygen into said furnace space, formed as an opening in a part of an outer wall surrounding said furnace space;
a gas discharge channel connected to said furnace space for discharging gases in said furnace space to an outside of said furnace space; and
a measurement device installed in said gas discharge channel for measuring properties of said gases passing through said gas discharge channel.

2. The heating furnace according to claim 1,
wherein
the gases in said furnace space is constantly discharged to the outside of said furnace space.

3. The heating furnace according to claim 1 or 2,
wherein
a flow rate of said gases passing through said gas discharge channel is at least 10 m³/h and at most 100 m³/h (Normal).

4. The heating furnace according to any of claims 1 to 3,
wherein
said measurement device is a gas concentration sensor.

5. The heating furnace according to claim 4,
wherein
said measurement device is an oxygen concentration sensor.

6. The heating furnace according to any of claims 1 to 5, comprising:
a control device having an input unit for inputting a value measured by said measurement device and an output unit for outputting a control signal; and
a furnace atmosphere adjustment device operated in accordance with the control signal output by said output unit on the basis of said measured value,
wherein
said furnace atmosphere adjustment device is operated on the basis of said control signal to adjust the properties of the gases in said furnace space.

7. The heating furnace according to any of claims 1 to 6,
wherein
said object to be heated is a kneaded material made of inorganic particles and an organic matter kneaded with each other.

8. The heating furnace according to claim 7,
wherein
said organic matter is heated to be removed from said object to be heated.

9. The heating furnace according to any of claims 1 to 8,
wherein
said heating furnace is used for degreasing said object to be heated.

10. The heating furnace according to any of claims 1 to 9,
wherein
said object to be heated is a pillar-shaped honeycomb molded body obtained by molding a material composition containing a ceramic raw material and an organic matter and having a plurality of cells longitudinally placed in parallel with one another with a cell wall therebetween.

11. A method for manufacturing a honeycomb structured body formed by said honeycomb fired body, comprising:
a honeycomb molded body manufacturing process for molding a material composition containing a ceramic raw material and an organic matter to manufacture a pillar-shaped honeycomb molded body having a plurality of cells longitudinally placed in parallel with one another with a cell wall therebetween;
a degreasing process for heating said honeycomb molded body in a heating furnace to remove said organic matter from said honeycomb molded body to manufacture a honeycomb degreased body; and
a firing process for firing said honeycomb degreased body to manufacture said honeycomb fired body,
wherein
said heating furnace used in said degreasing process comprises:
furnace space for disposing said honeycomb molded body,
a heating device for rising in temperature in said furnace space;
an oxygen supply channel for introducing gases containing oxygen into said furnace space, formed as an opening in a part of an outer wall surrounding said furnace space;
a gas discharge channel connected to said furnace space for discharging gases in said furnace space to an outside of said furnace space; and
a measurement device installed in said gas discharge channel for measuring properties of said gases passing through said gas discharge channel.

12. The method for manufacturing a honeycomb structured body according to claim 11,
wherein
in said degreasing process, the gas in said furnace space is constantly discharged to the outside of said furnace space.

13. The method for manufacturing a honeycomb structured body according to claim 11 or 12,
wherein
in said degreasing process, a flow rate of said gases passing through said gas discharge channel is at least 10 m³/h and at most 100 m³/h (Normal).

14. The method for manufacturing a honeycomb structured body according to any of claims 11 to 13,
wherein
said measurement device is a gas concentration sensor.

15. The method for manufacturing a honeycomb structured body according to claim 14,
wherein
said measurement device is an oxygen concentration sensor.

16. The method for manufacturing a honeycomb structured body according to any of claims 11 to 15,
wherein
said heating furnace comprises:
a control device having an input unit for inputting a value measured by said measurement device and an output unit for outputting a control signal; and
a furnace atmosphere adjustment device operated in accordance with the control signal output by said output unit on the basis of said measured values,
said furnace atmosphere adjustment device being operated on the basis of said control signal to adjust the properties of the gases in said furnace space.
